# EUROPEAN PATENT APPLICATION

(11) **EP 4 763 010 A1**
(43) Date of publication of application: **24.06.2026**
(21) Application number: 24221618.2
(22) Date of filing: 19.12.2024
(51) Int. Cl.: A47J 36/32, A47J 43/07

(54) **METHOD AND CONTROL UNIT FOR STARTING AND/OR STOPPING OPERATION OF A KITCHEN APPLIANCE**

(71) Applicant: BSH Hausgeräte GmbH, 81739 München (DE)
(72) Inventor: Brinovsek, Luka, 2259 Ivanjkovci (SI); Blatnik, Gregor, 2381 Podgorje (SI); Rupnik, David, 3222 Dramlje (SI)

(57) **Abstract**

A control unit (101) for a kitchen appliance (100) is described, wherein the kitchen appliance (100) comprises a motor (102) configured to drive a tool (107). The control unit (101) is configured to capture weight data using a weight sensor (110) of the appliance (100), and to automatically start and/or stop operation of the motor (102) in dependence of the weight data.

## Description

The present document relates to a kitchen appliance. In particular, the present document relates to increasing the comfort-of-use of a kitchen appliance.

A kitchen appliance may be configured to process a food item which is placed in or above the receptacle of the appliance using one or more (possibly interchangeable) tools. Exemplary tools are a knife, a shredder, a dough hook, a slicing tool, etc. The kitchen appliance may comprise a user interface which enables a user to select an operation program and/or an operation parameter (such as the temperature of a heating unit and/or the rotational speed of a tool) of the kitchen appliance.

The kitchen appliance may be realized as a kitchen appliance (e.g. stand mixer) with a head unit, an upright support part and a base unit (pedestal). The head unit may be pivotable relative to the upright support part extending vertically from the base unit and supporting the head unit. An electric motor with or without a gear unit may be arranged in the head unit. An outlet for driving processing tools is positioned in the head unit above a receptacle (bowl). The outlet may be arranged on the upper or the lower side of the head unit or both in case of two or more outlets.

Such a kitchen appliance can be configured as a L-shaped kitchen appliance (stand mixer).

The present document addresses the technical problem of increasing the comfort-of-use of a kitchen appliance, in particular with respect to starting and/or stopping operation of the kitchen appliance. The technical problem is solved by each one of the independent claims. Preferred examples are described in the dependent claims.

According to an aspect, a control unit for a kitchen appliance (e.g., for a food processor and/or for a cooking appliance and/or for a stand mixer) is described. The kitchen appliance comprises an electric motor which is configured to drive a tool. The electric motor may be configured to cause the motor shaft of the motor to rotate (with a certain rotational speed). The motor shaft may be mechanically coupled to the tool (notably to the tool shaft of the tool), thereby causing the tool to rotate. By way of example, the motor shaft may be mechanically coupled to the tool shaft of the tool via a gear unit.

Furthermore, the kitchen appliance comprises a weight sensor. The weight sensor may be located within the base of the appliance. In particular, the weight sensor may be located between the tool and the surface that the appliance is placed on. The weight sensor may be configured to capture weight data which is indicative of the weight of the appliance, in particular of the receptacle of the appliance that the tool is located in. The weight data may be used during operation of the appliance, e.g., for measuring the weight of a food item which is placed in/on the receptacle of the appliance.

The weight sensor may be arranged and/or located within the appliance such that a user that presses onto the tool and/or onto the receptacle causes the weight which is captured by the weight sensor to change in dependence of the strength and/or the force with which the user presses onto the tool and/or receptacle. In particular, the weight sensor may be arranged and/or located such that when the user increases the force which is applied to the tool and/or to the receptacle, the captured weight increases, and when the user decreases the force which is applied to the tool and/or to the receptacle, the captured weight decreases.

The control unit is configured to capture weight data using the weight sensor of the appliance. Furthermore, the control unit is configured to automatically start and/or stop operation of the motor in dependence of the weight data. In particular, the control unit may be configured to detect an increase of the weight that is captured and/or measured by the weight sensor, and in reaction to detecting the increase of the weight, the control unit may automatically start operation of the motor. Alternatively, or in addition, the control unit may be configured to detect a decrease of the weight that is captured and/or measured by the weight sensor. In reaction to detecting the decrease of the weight, the control unit may automatically stop operation of the motor.

Hence, a kitchen appliance is described, which makes use of the weight sensor of the appliance to enable a user of the appliance to start and/or stop operation of the motor of the appliance by pressing onto the tool which is driven by the motor and/or onto the receptacle. The fact that the user presses onto the tool and/or onto the receptacle may be detected solely based on the weight data and/or without making use of a (electronic and/or mechanical) switch. As a result of this, the comfort-of-use of the appliance may be increased in an efficient manner.

The control unit may be configured to determine a weight signal which is indicative of the weight that is captured and/or measured by the weight sensor as a function of time. The weight signal may be a continuous function which indicates the evolution of the weight over time in a continuous manner. The weight may be captured by the weight sensor and/or may be indicated by the weight signal with a resolution of 10 grams or higher, or 1 gram or higher.

Furthermore, the control unit may be configured to determine one or more parameters of the weight signal. Exemplary parameters of the weight signal comprise,
- a relative change, in particular a relative increase or a relative decrease, of the weight signal;
- a gradient of the weight signal; and/or
- an absolute level of the weight signal.

Furthermore, the control unit may be configured to determine, based on the one or more parameters of the weight signal, that the motor is to be started or stopped. By way of example, it may be detected that,
- the relative increase of the weight signal (within a given time interval) is equal to or greater than a pre-determined increase threshold; and/or
- the gradient of the weight signal is equal to or greater than a pre-determined gradient threshold; and/or
- the absolute level of the weight signal is equal to or higher than a pre-determined level threshold.
Based on this, it may be determined that the motor is to be started.

In another example, it may be determined that
- the (magnitude of the) relative decrease of the weight signal (within a given time interval) is equal to or greater than a pre-determined decrease threshold; and/or
- the (magnitude of the) gradient of the weight signal is equal to or greater than a pre-determined gradient threshold; and/or
- the absolute level of the weight signal is equal to or lower than a pre-determined level threshold.
Based on this, it may be determined that the motor is to be stopped.

In reaction to determining that the motor is to be started or stopped, the operation of the motor may be started or stopped automatically.

By analyzing a weight signal which indicates the measured weight over time, the weight data-dependent start or stop of operation of the motor (i.e., the Press-to-start functionality) of the appliance may be implemented in a particularly reliable manner.

The control unit may be configured to verify, in particular via a setting of the appliance (that can be changed by the user via the user interface of the appliance), whether the Press-to-start functionality of the appliance has been activated or deactivated. Furthermore, the control unit may be configured to automatically start and/or stop operation of the motor in dependence of the weight data, if (in particular, only if) the Press-to-start functionality has been activated. On the other hand, the automatic start and/or stop of the operation of the motor in dependence of the weight data may be disabled, if the Press-to-start functionality has been deactivated.

By enabling the user to turn on or off the Press-to-start functionality (via a setting of the appliance), the comfort-of-use of the appliance may be increased in a particularly safe manner.

As indicated above, the control unit may be configured to determine, based on the weight data, that operation of the motor is to be started. Furthermore, the control unit may be configured, in reaction to determining that operation of the motor is to be started and prior to automatically starting operation of the motor, to generate one or more notifications which are directed at informing the user that the motor is about to start operation automatically. Exemplary notifications are:
- an acoustic, optical and/or haptic notification via the user interface of the appliance; and/or
- one or more pulses of the motor.
By generating a notification prior to the weight triggered automatic start of operation of the motor of the appliance, the comfort-of-use of the appliance may be increased in a particularly safe manner.

As indicated above, the appliance may be configured to be operated with a set of different tools, wherein the different tools may be attached to the motor in an interchangeable manner. Exemplary tools (or tool types) are a slicing tool, a knife, a stirring tool, a dough hook, a shredder, a whisk and/or a beater.

The control unit may be configured to determine the type of the tool which is attached to the motor (its outlet) or to the outlet of a gear unit. Furthermore, the control unit may be configured to enable or disable the weight data-dependent automatic start and/or stop of the operation of the motor (i.e., the Press-to-Start functionality) in dependence of the type of the tool which is attached to the motor. By taking into account the tool which is attached to the motor for providing the Press-to-Start functionality, the comfort-of-use of the appliance may be increased in a particularly safe manner.

As indicated above, the weight data-dependent automatic start and/or stop of the operation of the motor, i.e., the Press-to-Start functionality, may be enabled or disabled, e.g. via a setting of the appliance and/or in dependence of the type of tool which is attached to the motor. Enabling the weight data-dependent automatic start and/or stop of the operation of the motor, i.e., the Press-to-Start functionality, may comprise activating the weight sensor of the appliance and/or activating measurement of the weight data.

The control unit may be configured to determine that the Press-to-start functionality of the appliance has been activated, in particular that the Press-to-start functionality has been activated via the user interface of the appliance. Furthermore, the control unit may be configured, in reaction to determining that the Press-to-start functionality has been activated, to (selectively) activate the weight sensor of the appliance.

By way of example, the weight sensor may be deactivated by default, and the weight sensor may be activated selectively when needed (e.g., for the Press-to-Start functionality). As a result of this, a particularly efficient operation of the appliance may be achieved.

The control unit may be configured to automatically start operation of the motor in dependence of the weight data such that in a first phase the motor is operated with a reduced speed and/or power, and that (only) in a subsequent second phase, the speed and/or power of the motor is increased to a standard operation level. The first phase may have a duration of half a second or more, or one second or more. The reduced speed and/or power may be at least 50% lower than the standard operation level.

Hence, the automatic start of operation of the motor may comprise a first phase that allows the user to react to the automatic start. As a result of this, the comfort-of-use of the appliance may be increased in a particularly safe manner.

According to a further aspect, a kitchen appliance is described, wherein the kitchen appliance comprises a control unit as specified within the present document. Furthermore, the kitchen appliance comprises a tool and a motor for driving the tool.

According to another aspect, a method for operating a kitchen appliance is described, wherein the kitchen appliance comprises a motor configured to drive a tool (wherein the tool may be located above a receptacle of the appliance). The method comprises capturing weight data using the weight sensor of the appliance. Furthermore, the method comprises automatically starting and/or stopping operation of the motor in dependence of the weight data.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1: shows a block diagram of a kitchen appliance, in particular of a cooking processor;
- Figure 2: shows a weight signal captured by the weight sensor of the kitchen appliance; and
- Figure 4: shows a flow chart of an exemplary method for operating a kitchen appliance.

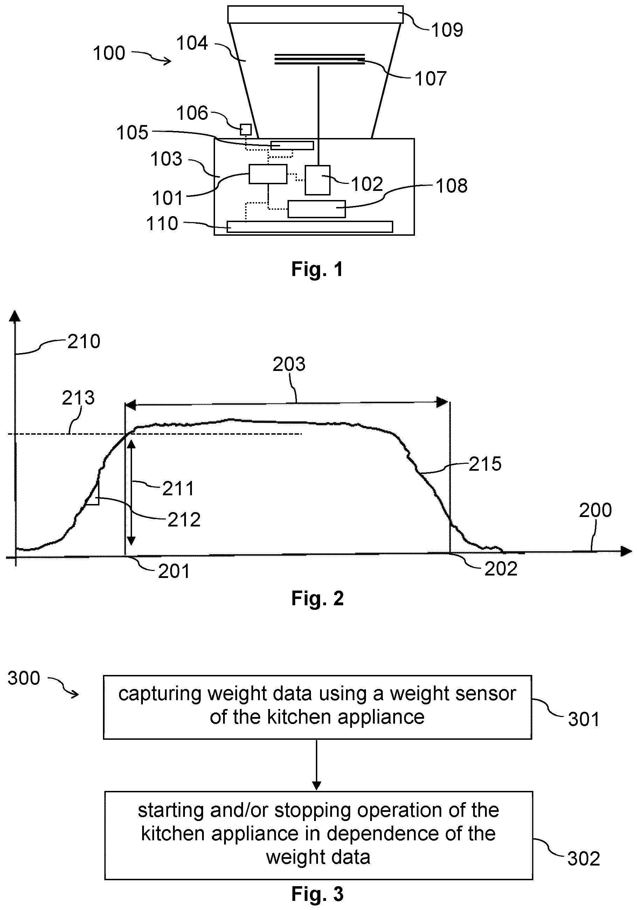

As outlined above, the present document is directed at increasing the comfort-of-use of a kitchen appliance, notably with regard to starting and/or stopping operation of the kitchen appliance. In this context, Fig. 1 shows a block diagram of an exemplary appliance 100 (in particular, a kitchen appliance) which comprises a base unit 103 on which a receptacle 104, in particular a bowl, is placed. The receptacle 104 may be configured to be covered by a lid 109. The base unit 103 comprises a motor 102 which is configured to drive a tool 107 that is located in the receptacle 104. The tool 107 may be detachable and/or exchangeable. In particular, the appliance 100 may be configured to be used with an arbitrary tool 107 out of a pre-determined set of different tools 107.

The appliance 100 may comprise a heating unit 106 (which may be integrated into the receptacle 104) for heating the receptacle 104, e.g., for allowing a food item to be cooked within the receptacle 104. Furthermore, the appliance 100 may comprise a temperature sensor 105 which is configured to provide sensor data regarding the temperature of the food item within the receptacle 104. In addition, the appliance 100 may comprise a user interface 108 which allows a user to interact with the appliance 100, e.g., for activating or for deactivating the motor 102 and/or for starting or for stopping operation of the appliance 100. A control unit 101 of the appliance 100 may be configured to operate the appliance 100, in particular the motor 102 and/or the heating unit 106, in dependence of a user input received via the user interface 108 (of the appliance 100 or of a remote device). The user interface 108 may comprise a display for displaying information to the user of the kitchen appliance 100.

Furthermore, the appliance 100 may comprise a weight sensor 110, which is configured to capture weight data with regard to the weight of the appliance 100, in particular with regard to the weight of the receptacle 104. The weight data that is captured by the weight sensor 110 may e.g. be used in the context of a guided cooking process. The user of the appliance 100 may be instructed via the user interface 108 to add a pre-determined amount of one or more food items to the receptacle 104. The weight data may be used to indicate to the user the amount of a food item that has already been added to the receptacle 104.

In an example, a user may use the kitchen appliance to slice or to shred a food item. For this purpose, the user holds the food item with one hand at an opening of the lid 109 of the receptacle 104 above the slicing or shredding tool 107. Furthermore, the user actuates a user element, such as a knob or a press button, of the user interface 108 to start operation of the appliance 100, in particular to start operation of the motor 102 for driving the tool 107.

In order to increase the comfort-of-use of the appliance 100, the control unit 101 of the appliance 100 may be configured to determine, based on the weight data captured by the weight sensor 110 of the appliance 100, that operation of the appliance 100, in particular operation of the motor 102 for driving the tool 107, is to be started (or stopped). Furthermore, the control unit 101 may be configured to automatically start (or stop) operation of the appliance 100. Hence, the weight data may be used to automatically start (or stop) operation of the appliance 100, thereby allowing the user to use the appliance 100 with only one hand.

In particular, the user may be enabled to press onto the receptacle 104 and/or tool 107, e.g., while holding a food item, thereby increasing the weight that is measured by the weight sensor 110. The weight increase may be detected by the control unit 101 which may then automatically start operation of the appliance 100. Furthermore, the user may be enabled to stop pressing onto the receptacle 104 and/or tool 107, thereby decreasing the weight that is measured by the weight sensor 110. The weight decrease may be detected by the control unit 101 which may then automatically stop operation of the appliance 100.

Fig. 2 shows an exemplary weight signal 215 that has been captured by the weight sensor 110. The weight signal 215 indicates the weight 210 that is measured by the weight sensor 110 as a function of time 200. The control unit 101 may be configured to determine one or more parameters 211, 212, 213 of the weight signal 215. Exemplary parameters 211, 212, 213 are,
- the absolute level 213 of the weight signal 215;
- the temporal gradient 212 of the weight signal 215; and/or
- the relative change 211 (e.g. increase or decrease) of the weight signal 215 (e.g. within a pre-determined time interval).

The control unit 101 may be configured to determine that the operation of the appliance 100 is to be started or stopped based on one or more parameters 211, 212, 213 of the weight signal 215. By way of example, operation of the appliance 110 may be automatically started,
- if the absolute level 213 of the weight signal 215 is at or above a pre-determined level threshold; and/or
- if the positive gradient 212 of the weight signal 215 is at or higher than a (positive) pre-determined gradient threshold; and/or
- if the positive relative change 212 of the weight signal 215 is at or above a (positive) pre-determined change threshold.

On the other hand, operation of the appliance 110 may be automatically stopped,
- if the absolute level 213 of the weight signal 215 drops below a pre-determined level threshold; and/or
- if the negative gradient 212 of the weight signal 215 is at or below a (negative) pre-determined gradient threshold; and/or
- if the relative change 212 of the weight signal 215 is at or below a (negative) pre-determined change threshold.

In the example of Fig. 2, it is detected at a first time instant 201, based on the weight signal 215, that the operation of the appliance 100 is to be started. Furthermore, it is detected at a second time instant 202, based on the weight signal 215, that the operation of the appliance 100 is to be stopped. As a result of this, the appliance 100 is operated automatically during a time interval 203 which starts at the first time instant 201 and which ends at the second time instant 202.

The automatic start of operation of the appliance 100 may be subjected to one or more pre-conditions. By way of example, the control unit 101 may be configured to verify within the settings of the appliance 100 whether the user has enabled or disabled this functionality. The weight-triggered start of operation of the appliance 100 may only be performed, if the setting indicates that the user has enabled this functionality.

The control unit 101 may be configured to notify the user of the appliance 100 prior to the automatic start of operation of the appliance 100. Exemplary notifications are,
- an acoustic and/or optical notification via the user interface 108; and/or
- a short action of the motor 102 which provides a haptic notification to the user.

As a result of this, the comfort-of-use of the appliance may be increased in a particularly safe manner.

Hence, a Press-to-Start functionality is described that enables a user of an appliance 100 to start a defined operation of the appliance 100 by touching or pressing the tool 107 of the appliance 100 or a food item which is held above the appliance 100. The functionality allows the user a one hand operation of the appliance 100 because the start and/or stop can be controlled by pressing down the tool 107 or by pressing down the to-be-processed food towards the tool 107, e.g. when slicing vegetable or salami, or when pressing a fruit, for instance a citrus (lemon, orange, grapefruit) etc. The pressing action is detected using the integrated scale and/or weight sensor 110 of the appliance 100.

The Press-to-Start functionality may be enabled by tracking the weight 210 using the integrated scale and/or weight sensor 110. The user may explicitly activate or deactivate the Press-to-Start functionality via the user interface 108 (e.g., using a setting of the appliance 100). When the user activates the Press-to-Start functionality, the user interface 108 may inform the user that operation of the appliance 100 may be started by pressing down a tool 107 or by pressing a to-be-processed food item onto the tool 107 (thereby indirectly pressing down the tool 107). The start of operation may be performed with or without pre-warning (i.e., notification), and/or with or without a limited motor speed and/or motor power.

In an example, the user wants to press an orange and therefore mounts a fruit press tool 107 onto the appliance 100. The control unit 101 of the appliance 100 may detect and identify the tool 107, which may cause the Press-to-Start functionality to be activated automatically. Alternatively, the user may manually activate the Press-to-Start functionality via the user interface 108. Once the appliance 100 has entered the Press-to-Start functionality, the weight sensor 110 may be activated and the weight 210 may be tracked (to determine a weight signal 215). The user may be informed via the user interface 108 that operation of the appliance 100 may be started by pressing the fruit onto the press tool 107. When the user pressed the fruit onto the press tool 107, the measured weight 210 increases. The weight 210 increase may automatically trigger the start of operation of the appliance 100. The start of operation may be performed with or without pre-warning (i.e., notification).

The Press-to-Start functionality enables a one hand operation of the appliance 100. Furthermore, the number of interactions with the user interface 108, e.g., with a knob of the user interface 108, may be reduced, thereby increasing the lifetime of the user interface 108.

Fig. 3 shows a flow chart of an exemplary (possibly computer-implemented) method 300 for operating a kitchen appliance 100, wherein the kitchen appliance 100 comprises a motor 102 which is configured to drive a tool 107 that is attached to the motor 102. The method 300 may be executed by a control unit 101 of the appliance 100.

The method 300 comprises capturing 301 weight data using the weight sensor 110 of the appliance 100. The weight sensor 110 may be configured to capture weight data regarding the weight of a food item which is placed in the receptacle 104 of the appliance 100 or on/in the tool 7 or its receptacle, e.g. fruit press.

Furthermore, the method 300 comprises automatically starting and/or stopping 302 operation of the motor 102 in dependence of the weight data. In particular, a relatively steep increase of the weight 210 that is captured by the weight sensor 110 may lead to an automatic start of operation of the motor 102 which drives the tool 107. On the other hand, a decrease of the weight 210 that is captured by the weight sensor 110 may lead to an automatic stop of operation of the motor 102.

Hence, the weight sensor 110 of the appliance 100 may be used as part of the user interface of the appliance 100, thereby enabling a user of the appliance 100 to start and/or stop operation of the motor 102 of the appliance 100 in a particularly comfortable manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A control unit (101) for a kitchen appliance (100); wherein the kitchen appliance (100) comprises a motor (102) configured to drive a tool (107); wherein the control unit (101) is configured to
- capture weight data using a weight sensor (110) of the appliance (100); and
- automatically start and/or stop operation of the motor (102) in dependence of the weight data.

2. The control unit (101) according to claim 1, wherein
- the weight sensor (110) is configured to capture weight data which is indicative of a weight (210) of the appliance (100), in particular of a receptacle (104) of the appliance (100) that the tool (107) is located in; and/or
- the weight sensor (110) is arranged in the appliance (100) such that a user that presses onto the tool (107) causes the weight (210) which is captured by the weight sensor (110) to change in dependence of the force with which the user presses onto the tool (107).

3. The control unit (101) according to any previous claim, wherein the control unit (101) is configured to
- determine a weight signal (215) which is indicate of a weight (210) captured by the weight sensor (110) as a function of time (200);
- determine one or more parameters (211, 212, 213) of the weight signal (215);
- determine, based on the one or more parameters (211, 212, 213) of the weight signal (215), that the motor (102) is to be started or stopped; and
- in reaction to determining that the motor (102) is to be started or stopped, automatically start or stop operation of the motor (102).

4. The control unit (101) according to claim 3, wherein the one or more parameters (211, 212, 213) of the weight signal (215) comprise,
- a relative change (211), in particular an increase or a decrease, of the weight signal (215);
- a gradient (212) of the weight signal (215); and/or
- an absolute level (213) of the weight signal (215).

5. The control unit (101) according to any previous claim, wherein the control unit (101) is configured to
- detect an increase of a weight (210) that is captured by the weight sensor (110); and
- in reaction to detecting the increase of the weight (210), automatically start operation of the motor (102); and/or
- detect a decrease of the weight (210) that is captured by the weight sensor (110); and
- in reaction to detecting the decrease of the weight (210), automatically stop operation of the motor (102).

6. The control unit (101) according to any previous claim, wherein the control unit (101) is configured to
- verify, in particular via a setting of the appliance (100), whether a Press-to-start functionality of the appliance (100) has been activated or deactivated;
- automatically start and/or stop operation of the motor (102) in dependence of the weight data, if the Press-to-start functionality has been activated; and
- disable an automatic start and/or stop of the operation of the motor (102) in dependence of the weight data, if the Press-to-start functionality has been deactivated.

7. The control unit (101) according to any previous claim, wherein the control unit (101) is configured to
- determine, based on the weight data, that operation of the motor (102) is to be started; and
- in reaction to determining that operation of the motor (102) is to be started and prior to automatically starting operation of the motor (102), generate one or more notifications which are directed at informing the user that the motor (102) is about to start operation automatically.

8. The control unit (101) according to any previous claim, wherein the control unit (101) is configured to
- determine a type of the tool (107) which is attached to the motor (102); and
- enable or disable the weight data dependent automatic start and/or stop of the operation of the motor (102) in dependence of the type of the tool (107) which is attached to the motor (102); wherein enabling the weight data dependent automatic start and/or stop of the operation of the motor (102) comprises in particular activating the weight sensor (110) of the appliance (100).

9. The control unit (101) according to any previous claim, wherein the control unit (101) is configured to
- determine that a Press-to-start functionality of the appliance (100) has been activated, in particular that the Press-to-start functionality has been activated via a user interface (108) of the appliance (100); and
- in reaction to determining that the Press-to-start functionality has been activated, activate the weight sensor (110) of the appliance (100).

10. The control unit (101) according to any previous claim, wherein the control unit (101) is configured to automatically start operation of the motor (102) in dependence of the weight data such that
- in a first phase the motor (102) is operated with a reduced speed and/or power; and
- in a subsequent second phase, the speed and/or power of the motor (102) is increased to a standard operation level.

11. A kitchen appliance (100) comprising
- a tool (107);
- a motor (102) for driving the tool (107); and
- a control unit (101) according to any of the previous claims.

12. A method (300) for operating a kitchen appliance (100); wherein the kitchen appliance (100) comprises a motor (102) configured to drive a tool (107); wherein the method (300) comprises,
- capturing (301) weight data using a weight sensor (110) of the appliance (100); and
- automatically starting and/or stopping (302) operation of the motor (102) in dependence of the weight data.
